# EUROPEAN PATENT APPLICATION

(11) **EP 1 603 347 A1**
(43) Date of publication of application: **07.12.2005**
(21) Application number: 04726890.9
(22) Date of filing: 12.04.2004
(51) Int. Cl.: H04Q 7/20

(54) **INFORMATION DISCLOSURE SYSTEM**

(30) Priority: 22.04.2003 JP 2003117071
(71) Applicant: MATSUSHITA ELECTRIC INDUSTRIAL CO., LTD., Kadoma-shi, Osaka 571-8501 (JP)
(72) Inventor: UENO, Tsuyoshi, Kanagawa 239-0842 (JP)
(74) Representative: Grünecker, Kinkeldey, Stockmair & Schwanhäusser Anwaltssozietät
(86) International application number: PCT/JP2004/005198
(87) International publication number: WO 2004/095858

(57) **Abstract**

An object of the invention is to provide an information release system capable of limiting information release only to a mobile station existing in a specific range area. A mobile station (12) includes an input unit (101) for entering release range information; a position information detection unit (102) for detecting position information of the mobile station (12) at regular time intervals; and a mobile station radio unit (103) for transmitting the release range information and the position information to a server (14) through a base station (11) and a network (13). The server (14) includes a release range position information acquisition unit (104) for acquiring release range position information corresponding to the release range information from the mobile station radio unit (103); an in-range determination unit (105) for determining whether or not the mobile station (12) exists in the release range based on the release range position information and the position information; and a release information storage unit (106) for releasing information to the mobile station (12) only when the mobile station (12) exists in the release range.

## Description

### <Technical Field>

This invention relates to an information release system for releasing information to a mobile station from a server through a network and a base station.

### <Background Art>

Recently, information release systems for limiting the release method and the release range of information based on the access right, etc., have been known. In most of the systems, information is narrowed with a search condition set up. Likewise, position information of a mobile station is also provided with a search condition set up.

As this kind of information release system, an information providing service system as disclosed in patent document 1 is known. The information providing service system enables the user to search for and acquire information concerning buildings existing in a predetermined distance range, service information of stores in a specific building in the user's vision, etc., from terminal position information of the user, etc. The system also enables the user to search for and acquire moving direction information of the user from spatial position information of the terminal of the user.
(Patent document 1) JP-2002-132806

However, the information release system in the related art as described above searches for information concerning the district from position information, etc., where the mobile station such as a mobile terminal exists, and provides the found information and cannot limit information release only to the mobile stations existing in a specific range region (specified area of block of district, riverside, mountainous region, etc.,). The system cannot provide specified information only for the mobile stations existing at the specified position or range or in the specified time period.

The invention is embodied in view of such actual circumstances and it is an object of the invention to provide an information release system capable of limiting information release only to a mobile station existing in a specific range area.

### <Disclosure of the Invention>

According to the invention as set forth in claim 1, there is provided an information release system for releasing information to a mobile station from a server through a network and a base station, the information release system includes the mobile station and the server. The mobile station includes an input unit which enters range information in which a user requests to release information, a position information detection unit which detects position information of the mobile station at regular time intervals, and a mobile station radio unit which transmits the range information entered through the input unit and the position information detected in the position information detection unit to the server through the base station and the network. The server includes a release range position information acquisition unit which acquires release range position information corresponding to the range information from the mobile station radio unit of the mobile station, an in-range determination unit which determines whether or not the mobile station exists in the release range in which the user requests to release in accordance with the release range position information acquired in the release range position information acquisition unit and the position information, and a release information storage unit which releases information to the mobile station only when the mobile station exists in the release range.

According to the configuration, only when the mobile station exists in the release range, information is released to the mobile station, so that information release can be limited only to the mobile stations existing in a specific range area.

The information release system of the invention as set forth in claim 2 is characterized by the fact that in the information release system of the invention as set forth in claim 1, the position information is spatial position information.

According to the configuration, the position information is spatial position information, so that information release can be limited only to the mobile stations existing in a specific space range area.

The information release system of the invention as set forth in claim 3 is characterized by the fact that in the information release system of the invention as set forth in claim 1, the input unit of the above-mentioned mobile station is a release range position information input unit for directly entering the release range position information.

According to the configuration, the input unit of the mobile station is a release range position information input unit for directly entering the release range position information, so that the need for the server to acquire the release range position information is eliminated.

The information release system of the invention as set forth in claim 4 is characterized by the fact that in the information release system of the invention as set forth in claim 1, the release range position information acquisition unit, the in-range determination unit, and the release information storage unit are included in the above-mentioned mobile station.

According to the configuration, the release range position information acquisition unit, the in-range determination unit, and the release information storage unit are placed in the mobile station, so that information exchange can be limited only between the mobile stations existing in a specific range area.

The information release system of the invention as set forth in claim 5 is characterized by the fact that in the information release system of the invention as set forth in claim 1, the above-mentioned mobile station includes a position specification release information input unit which enters the release information from the user and the position information of the mobile station. The server includes a position specification release information storage unit which receives and stores position specification release information from each mobile station, a position specification release information search unit which searches information corresponding to the position of a different mobile station among the position specification release information in the position specification release information storage unit, and a position specification release information transmission unit which transmits the position specification release information found in the position specification release information search unit to the different mobile station at the position.

According to the configuration, the position specification release information found in the position specification release information search unit is transmitted to a different mobile station, so that it is made possible to acquire information at the specified position or in the specified area in the different mobile station.

The information release system of the invention as set forth in claim 6 is characterized by the fact that in the information release system of the invention as set forth in claim 5, time specification release information is used in addition to the position specification release information to release information at the time.

According to the configuration, the time specification release information is used in addition to the position specification release information, so that information release can be limited to a specific time.

The information release system of the invention as set forth in claim 7 is characterized by the fact that in the information release system of the invention as set forth in claim 1, the above-mentioned server includes a local mail address sending unit which transmits a local mail address that can be used in the release range and a local mail address of a different mobile station existing in the release range to the user only when the mobile station exists in the release range, and a local mail address storage unit which stores the local mail addresses.

According to the configuration, the local mail address is transmitted and stored, so that information exchange using the local mail addresses can be limited only between the mobile stations existing in a specific range area.

The information release system of the invention as set forth in claim 8 is characterized by the fact that in the information release system of the invention as set forth in claim 1, the above-mentioned server includes a local URL address sending unit which transmits a local URL address that can be used and accessed in the release range and a local URL address of a different mobile station existing in the release range to the user only when the mobile station exists in the release range, and a local URL address storage unit which stores the local URL addresses.

According to the configuration, the local URL address is transmitted and stored, so that information exchange of home pages, etc., using the local URL addresses can be limited only between the mobile stations existing in a specific range area.

The information release system of the invention as set forth in claim 9 is characterized by the fact that in the information release system of the invention as set forth in claim 1, the above-mentioned mobile station includes a light and darkness, temperature, and a sound information detection unit which detects light and darkness, temperature, and sound information of the mobile station in place of the position information detection unit. The server includes a release range, light and darkness, temperature, and a sound information acquisition unit which acquires numeric information of light and darkness, temperature, and sound information of each mobile station in place of the release range position information acquisition unit, and an in-range determination unit which determines whether or not each mobile station exists in the range in accordance with the numeric information of the light and darkness, temperature, and sound information of the mobile station in place of the in-range determination unit.

According to the configuration, the light and darkness, temperature, and sound information is used, so that information release can be limited only to the mobile stations existing in the specific range area relating to the information.

The information release system of the invention as set forth in claim 10 is characterized by the fact that in the information release system of the invention as set forth in claim 1, the above-mentioned mobile station includes a position information service request input unit which enters a position information service request from the user and a user ID. The server includes a position information service mobile station management unit which checks whether or not the mobile station exists in the range in which the mobile station can receive the position information service, releases information in the release information storage unit when the mobile station exists in the range, and informs the user of the position information service that can be provided, and a position information service notification unit which notifies the mobile station of the service that can be provided at the current position of the mobile station.

According to the configuration, the user enters a position information service request and the user ID in the mobile station, so that providing the service involved in the position can be limited only to the mobile stations existing in a specific range area.

The information release system of the invention as set forth in claim 11 is characterized by the fact that in the information release system of the invention as set forth in claim 1, the above-mentioned mobile station includes a release space range position information mapping unit which maps release range information and the position of the mobile station in a space to a map or a capture image, and a mapping image output unit which provides an image in which the release range information and the position of the mobile station are mapped to the map or the capture image to the mobile station.

According to the configuration, the release range information and the position of the mobile station in a space are mapped to a map or a capture image, so that the information release range can be presented to the mobile station.

The information release system of the invention as set forth in claim 12 is characterized by the fact that in the information release system of the invention as set forth in claim 1, the input unit of the mobile station enters attribute information as well as the range information in which the user requests to release.

According to the configuration, the user enters the attribute information as well as the range information to desire release of information through the input unit of the mobile station, so that the attribute information can also be used to limit the release information.

### <Brief Description of the Drawings>

FIG. 1 is a block diagram to show the schematic configuration of an information release system according to a first embodiment of the invention;
FIG. 2 is a flowchart to describe the operation of the information release system according to the first embodiment of the invention;
FIG. 3 is an image drawing of the information release range in the first embodiment of the invention;
FIG. 4 is a block diagram to show the schematic configuration of an information release system according to a second embodiment of the invention;
FIG. 5 is a flowchart to describe the operation of the information release system according to the second embodiment of the invention;
FIG. 6 is an image drawing of the information release range in the second embodiment of the invention;
FIG. 7 is a block diagram to show the schematic configuration of an information release system according to a third embodiment of the invention;
FIG. 8 is a flowchart to describe the operation of the information release system according to the third embodiment of the invention;
FIG. 9 is an image drawing of the information release range in the third embodiment of the invention;
FIG. 10 is a block diagram to show the schematic configuration of an information release system according to a fourth embodiment of the invention;
FIG. 11 is a flowchart to describe the operation of the information release system according to the fourth embodiment of the invention;
FIG. 12 is an image drawing of the information release range in the fourth embodiment of the invention;
FIG. 13 is a block diagram to show the schematic configuration of an information release system according to a fifth embodiment of the invention;
FIG. 14 is a flowchart to describe the operation of the information release system according to the fifth embodiment of the invention;
FIG. 15 is an image drawing of the information release range in the fifth embodiment of the invention;
FIG. 16 is a block diagram to show the schematic configuration of an information release system according to a sixth embodiment of the invention;
FIG. 17 is a flowchart to describe the operation of the information release system according to the sixth embodiment of the invention;
FIG. 18 is an image drawing of the information release range in the sixth embodiment of the invention;
FIG. 19 is a block diagram to show the schematic configuration of an information release system according to a seventh embodiment of the invention;
FIG. 20 is a flowchart to describe the operation of the information release system according to the seventh embodiment of the invention;
FIG. 21 is an image drawing of the information release range in the seventh embodiment of the invention;
FIG. 22 is a block diagram to show the schematic configuration of an information release system according to an eighth embodiment of the invention;
FIG. 23 is a flowchart to describe the operation of the information release system according to the eighth embodiment of the invention;
FIG. 24 is an image drawing of the information release range in the eighth embodiment of the invention;
FIG. 25 is a block diagram to show the schematic configuration of an information release system according to a ninth embodiment of the invention;
FIG. 26 is a flowchart to describe the operation of the information release system according to the ninth embodiment of the invention;
FIG. 27 is an image drawing of the information release range in the ninth embodiment of the invention;
FIG. 28 is a block diagram to show the schematic configuration of an information release system according to a tenth embodiment of the invention;
FIG. 29 is a flowchart to describe the operation of the information release system according to the tenth embodiment of the invention;
FIG. 30 is an image drawing of the information release range in the tenth embodiment of the invention;
FIG. 31 is a block diagram to show the schematic configuration of an information release system according to an eleventh embodiment of the invention;
FIG. 32 is a flowchart to describe the operation of the information release system according to the eleventh embodiment of the invention;
FIG. 33 is an image drawing of the information release range in the eleventh embodiment of the invention;
FIG. 34 is a block diagram to show the schematic configuration of an information release system according to a twelfth embodiment of the invention;
FIG. 35 is a flowchart to describe the operation of the information release system according to the twelfth embodiment of the invention; and
FIG. 36 is an image drawing of the information release range in the twelfth embodiment of the invention.

In the figures,
numeral 11 denotes a base station, numeral 12 denotes a mobile station, numeral 13 denotes a network, numeral 14 denotes a server, numeral 15 denotes a mobile station group, numeral 101 denotes an input section, numeral 102 denotes a position information detection section, numeral 103 denotes a mobile station radio section, numeral 104 denotes a release range position information acquisition section, numeral 105 denotes an in-range determination section, numeral 106 denotes a release information storage section, numeral 401 denotes a spatial position information detection section, numeral 402 denotes a release space range position information acquisition section, numeral 403 denotes an in-space-range determination section, numeral 701 denotes a release range position information input section, numeral 1301 denotes a position specification release information input section, numeral 1302 denotes a position specification release information transmission section, numeral 1303 denotes a position specification release information search section, numeral 1304 denotes a position specification release information storage section, numeral 1601 denotes a position and time specification release information input section, numeral 1602 denotes a position and time specification release information transmission section, numeral 1603 denotes a position and time specification release information search section, numeral 1604 denotes a position and time specification release information storage section, numeral 1901 denotes a local mail address sending section, numeral 1902 denotes a local mail address storage section, numeral 2201 denotes a local URL address sending section, numeral 2202 denotes a local URL address storage section, numeral 2501 denotes a light and darkness, temperature, and sound information detection section, numeral 2502 denotes a release range, light and darkness, temperature, and sound information acquisition section, numeral 2503 denotes an in-range determination section, numeral 2801 denotes a position information service request input section, numeral 2802 denotes a position information service mobile station management section, numeral 2803 denotes a position information service communication section, numeral 3101 denotes a release space range position information transmission section, numeral 3102 denotes a release space range position information mapping section, numeral 3103 denotes a map section, numeral 3104 denotes a mapping image output section, and numeral 3401 denotes an attribute information input section.

### <Best Mode for Carrying out the Invention>

Embodiments of the invention will be discussed in detail with reference to the accompanying drawings.

### (First embodiment)

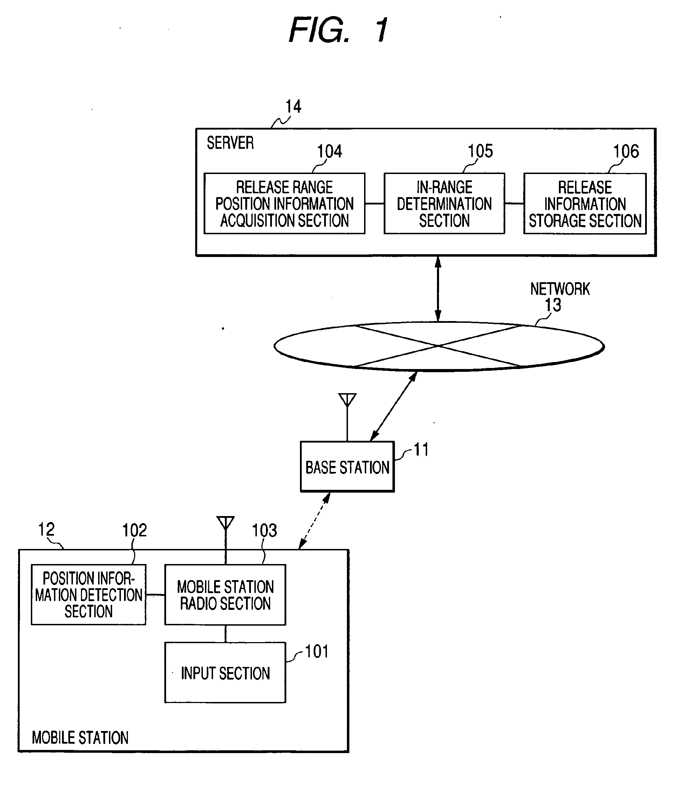

FIG. 1 is a block diagram to show the schematic configuration of an information release system according to a first embodiment of the invention. In FIG. 1, the information release system according to the first embodiment includes a base station 11, a mobile station 12 for conducting radio communications with the base station 11, a network 13 connected to the base station 11, and a server 14 connected to the network 13. The information release system releases information to the mobile station 12 from the server 14 through the network 13 and the base station 11.

The mobile station 12 includes an input section 101 for the user to enter range information to desire release of information, a position information detection section 102 for detecting position information of the mobile station 12 at regular time intervals, and a mobile station radio section 103 for transmitting the range information entered through the input section 101 and the position information detected in the position information detection section 102 to the server 14 through the base station 11 and the network 13.

The server 14 includes a release range position information acquisition section 104 for acquiring release range position information corresponding to the range information and the position information from the mobile station radio section 103 of the mobile station 12, an in-range determination section 105 for determining whether or not the mobile station 12 exists in the release range in which the user desires release of information based on the release range position information acquired in the release range position information acquisition section 104, and a release information storage section 106 for releasing information to the mobile station 12 only when the mobile station 12 exists in the release range.

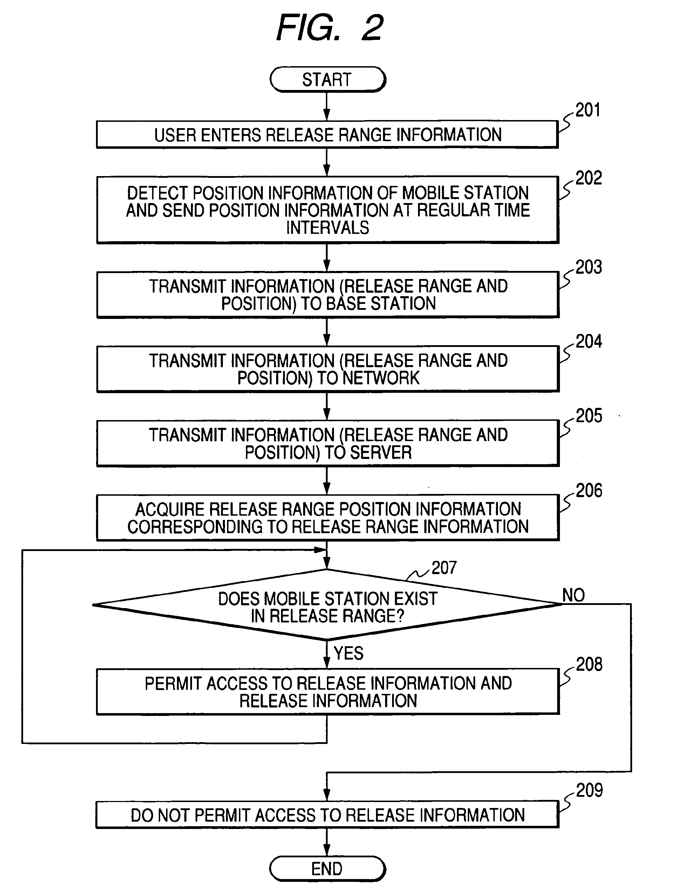

Next, the operation of the information release system according to the first embodiment having the configuration described above will be discussed based on a flowchart of FIG. 2. First, the user enters the release range information to desire release of information through the input section 101 (step 201). The position information detection section 102 detects the position information of the mobile station 12 and sends the position information to the mobile station radio section 103 at regular time intervals (step 202). The mobile station radio section 103 transmits the release range information entered at step 201 and the position information detected at step 202 to the base station 11 (step 203). The base station 11 transmits the release range information and the position information received from the mobile station 12 to the network 13 (step 204). The network 13 transmits the release range information and the position information to the server 14 (step 205).

The release range position information acquisition section 104 acquires the release range position information corresponding to the release range information and the position information received from the network 13 (step 206). The in-range determination section 105 determines whether or not the mobile station 12 exists in the release range in which the user desires release of information based on the release range position information acquired in the release range position information acquisition section 104 (step 207). If it is determined at step 207 that the mobile station 12 exists in the release range, the release information storage section 106 permits the mobile station 12 to access release information and releases information to the mobile station (step 208). On the other hand, if it is determined at step 207 that the mobile station 12 does not exist in the release range, the release information storage section 106 does not permit the mobile station 12 to access release information (step 209).

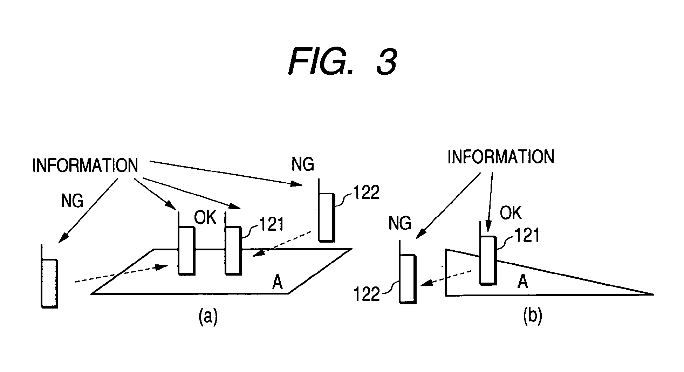

FIG. 3 is an image drawing of the information release range in the first embodiment. As shown in FIG. 3, information is released to a mobile station 121 existing in range A, but not to a mobile station 122 existing outside range A and the mobile station 122 is not permitted to access release information.

Thus, in the first embodiment, information is released only to mobile stations existing in a specific range. Accordingly, information release can be limited only to the mobile stations existing in the specific range area. For example, information can be locally released only to the mobile stations existing in a specific area, an area of a rectangular area, a triangular area, riverside, seaside, a building, an event place, etc., as shown in FIG. 3 (a), (b).

### (Second embodiment)

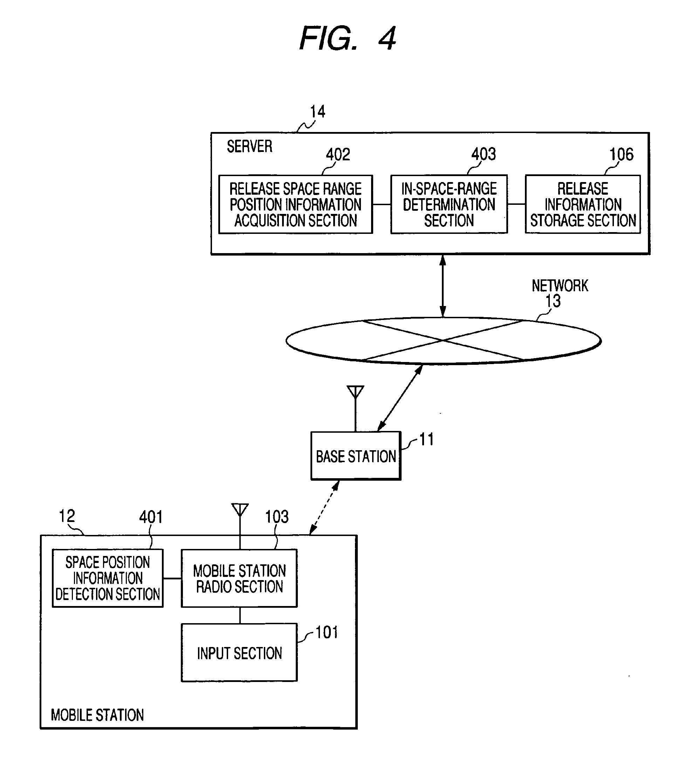

FIG. 4 is a block diagram to show the schematic configuration of an information release system according to a second embodiment of the invention. In the configuration of the information release system according to the first embodiment shown in FIG. 1, the information release system according to the second embodiment is provided with a spatial position information detection section 401 for detecting spatial position information of the mobile station 12 at regular time intervals in place of the position information detection section 102, a release space range position information acquisition section 402 for acquiring release space range position information corresponding to the space range information and the space position information from the mobile station radio section 103 of the mobile station 12 in place of the release range position information acquisition section 104, and further an in-space-range determination section 403 for determining whether or not the mobile station 12 exists in the release space range in which the user desires release of information based on the release space range position information acquired in the release space range position information acquisition section 402 in place of the in-range determination section 105. Sections corresponding to those of the information release system according to the first embodiment shown in FIG. 1 are denoted by the same reference numerals in FIG. 4 and will not be discussed again.

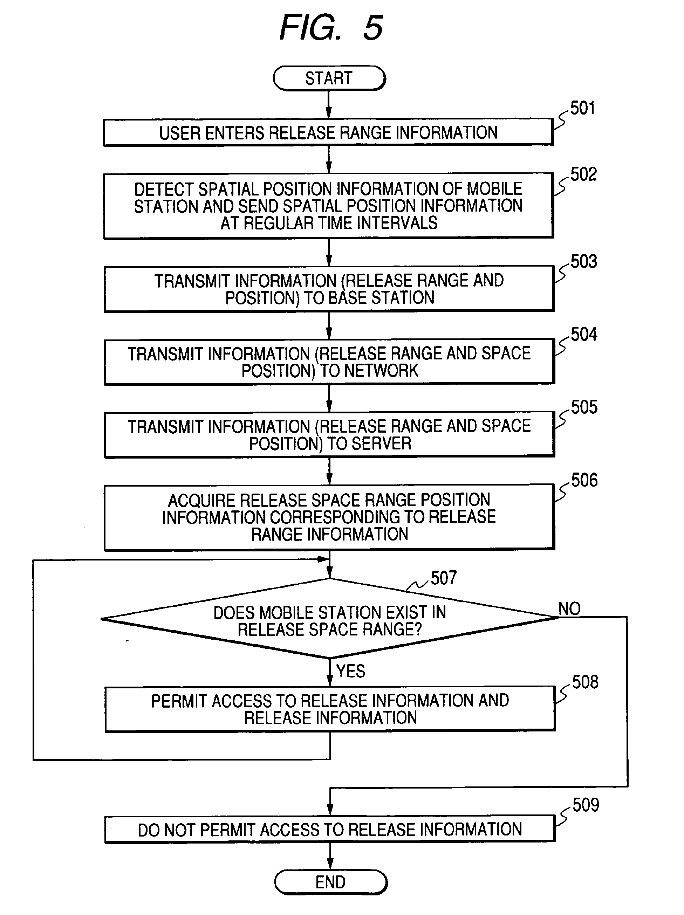

Next, the operation of the information release system according to the second embodiment having the configuration described above will be discussed based on a flowchart of FIG. 5. First, the user enters the release range information to desire release of information through an input section 101 (step 501). The spatial position information detection section 401 detects the spatial position information of a mobile station 12 and sends the spatial position information to a mobile station radio section 103 at regular time intervals (step 502). The mobile station radio section 103 transmits the release range information entered at step 501 and the spatial position information detected at step 502 to a base station 11 (step 503). The base station 11 transmits the release range information and the spatial position information received from the mobile station 12 to a network 13 (step 504). The network 13 transmits the release range information and the spatial position information to a server 14 (step 505).

The release space range position information acquisition section 402 acquires the release space range position information corresponding to the release range information and the spatial position information received from the network 13 (step 506). The in-space-range determination section 403 determines whether or not the mobile station 12 exists in the release space range in which the user desires release of information based on the release space range position information acquired in the release space range position information acquisition section 402 (step 507). If it is determined at step 507 that the mobile station 12 exists in the release space range, a release information storage section 106 permits the mobile station 12 to access release information and releases information to the mobile station (step 508). On the other hand, if it is determined at step 507 that the mobile station 12 does not exist in the release space range, the release information storage section 106 does not permit the mobile station 12 to access release information (step 509).

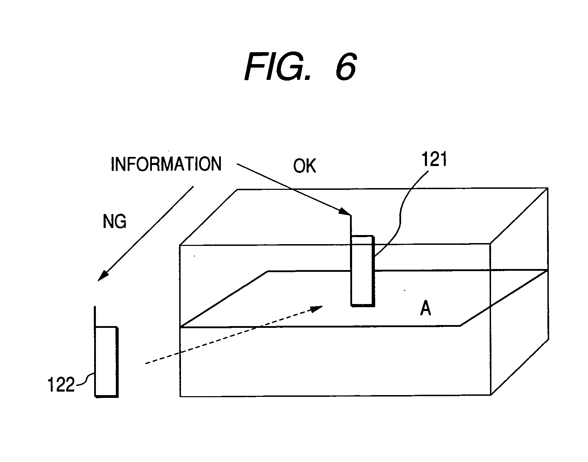

FIG. 6 is an image drawing of the information release range in the second embodiment. As shown in FIG. 6, information is released to a mobile station 121 existing in space range A, but not to a mobile station 122 existing outside space range A and the mobile station 122 is not permitted to access release information.

Thus, in the second embodiment, information is released only to mobile stations existing in a specific space range. Accordingly, information release can be limited only to the mobile stations existing in the specific space range area. For example, information can be locally released only to the mobile stations existing in a specific space area, a space area of a second floor of a building, mountain top, etc., as shown in FIG. 6.

### (Third embodiment)

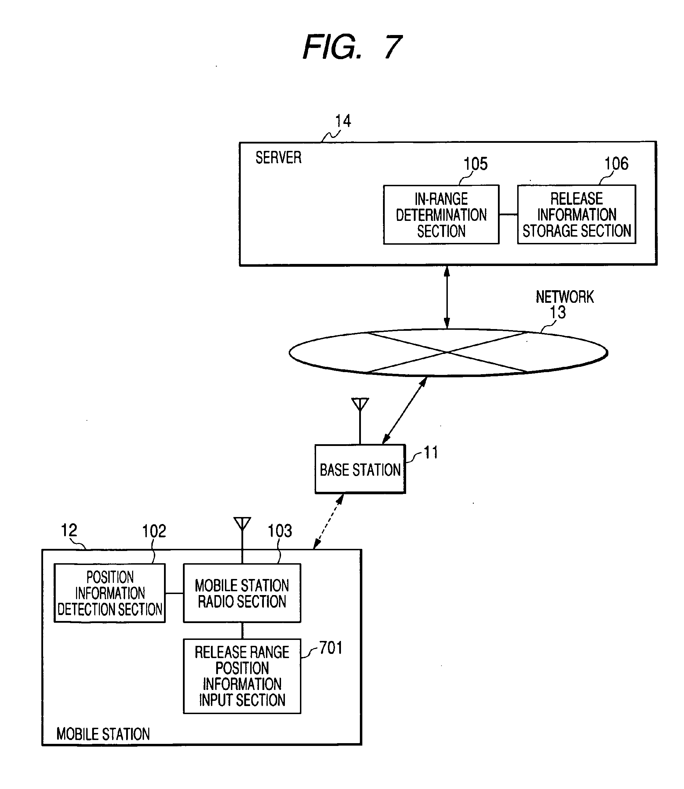

FIG. 7 is a block diagram to show the schematic configuration of an information release system according to a third embodiment of the invention. In the configuration of the information release system according to the first embodiment shown in FIG. 1, the information release system according to the third embodiment is provided with a release range position information input section 701 for directly entering release range position information in place of the input section 101. Sections corresponding to those of the information release system according to the first embodiment shown in FIG. 1 are denoted by the same reference numerals in FIG. 7 and will not be discussed again.

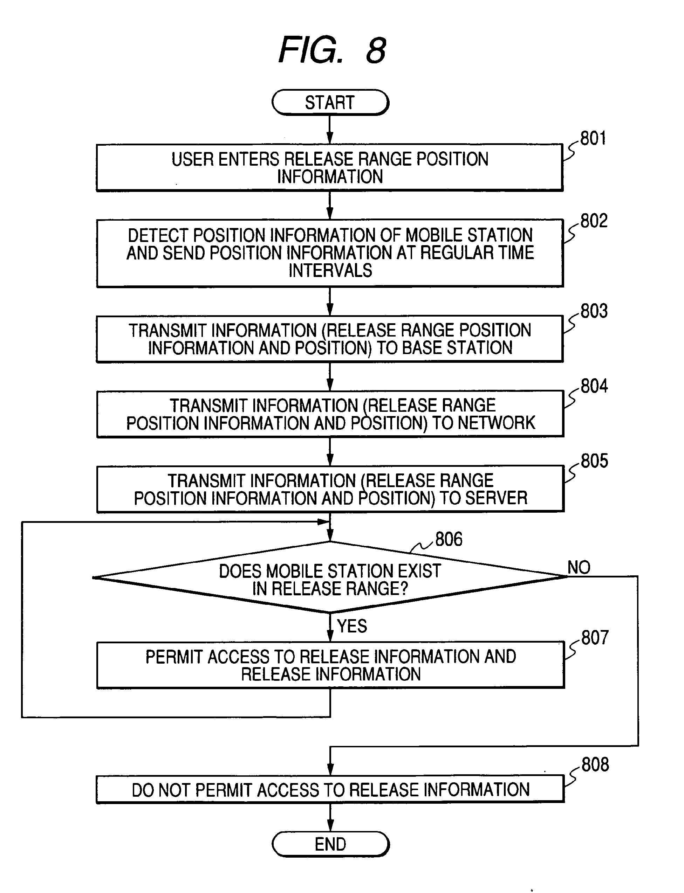

Next, the operation of the information release system according to the third embodiment having the configuration described above will be discussed based on a flowchart of FIG. 8. First, the user directly enters release range position information through the release range position information input section 701 (step 801). A position information detection section 102 detects the position information of a mobile station 12 and sends the position information to a mobile station radio section 103 at regular time intervals (step 802). The mobile station radio section 103 transmits the release range position information entered at step 801 and the position information detected at step 802 to a base station 11 (step 803). The base station 11 transmits the release range position information and the position information received from the mobile station 12 to a network 13 (step 804). The network 13 transmits the release range position information and the position information to a server 14 (step 805).

An in-range determination section 105 determines whether or not the mobile station 12 exists in the release range in which the user desires release of information based on the received release range position information (step 806). If it is determined at step 806 that the mobile station 12 exists in the release range, a release information storage section 106 permits the mobile station 12 to access release information and releases information to the mobile station (step 807). On the other hand, if it is determined at step 806 that the mobile station 12 does not exist in the release range, the release information storage section 106 does not permit the mobile station 12 to access release information (step 808).

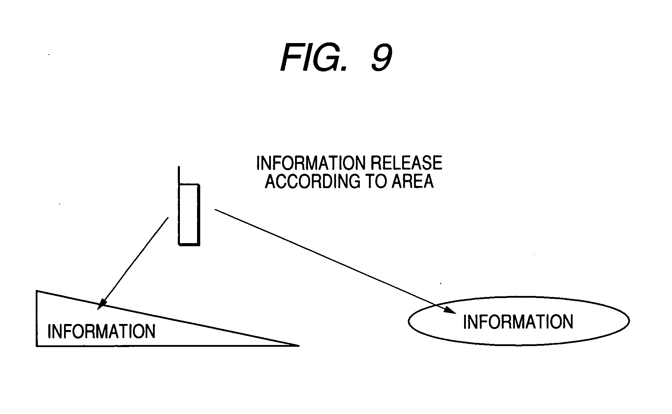

FIG. 9 is an image drawing of the information release range in the third embodiment. As shown in FIG. 9, the information release range can be specified only in areas of a triangle, a circle, etc.

Thus, in the third embodiment, information is released only in specific position areas. Accordingly, information release can be limited only to the inside of a specific position area.

### (Fourth embodiment)

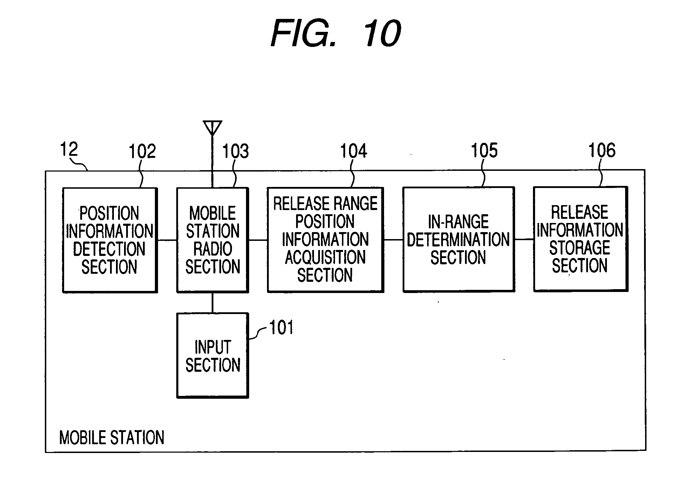

FIG. 10 is a block diagram to show the schematic configuration of an information release system according to a fourth embodiment of the invention. In the configuration of the information release system according to the first embodiment shown in FIG. 1, the information release system according to the fourth embodiment has the mobile station 12 provided with the release range position information acquisition section 104, the in-range determination section 105, and the release information storage section 106 in addition to the input section 101, the position information detection section 102, and the mobile station radio section 103. Sections corresponding to those of the information release system according to the first embodiment shown in FIG. 1 are denoted by the same reference numerals in FIG. 10 and will not be discussed again.

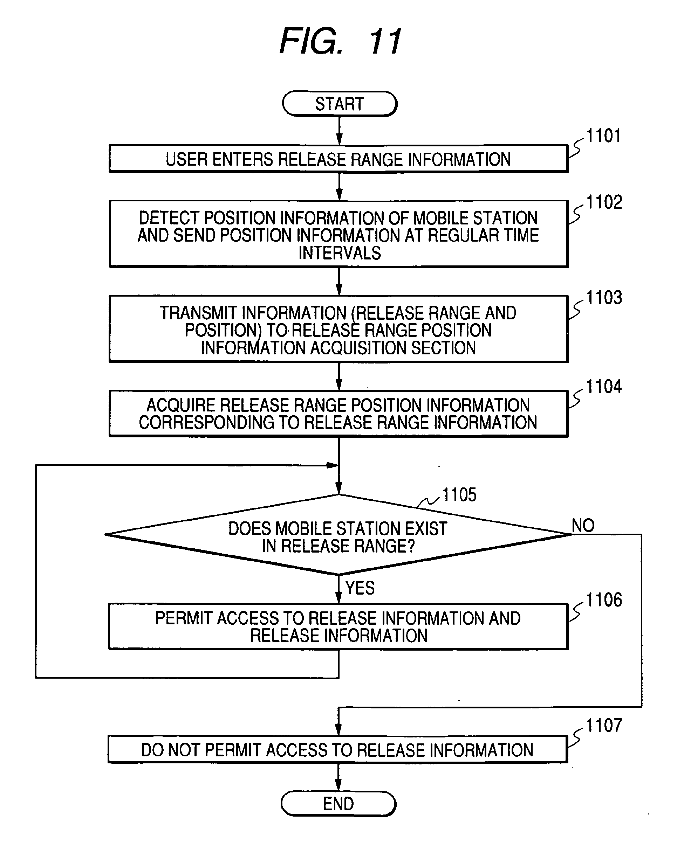

Next, the operation of the information release system according to the fourth embodiment having the configuration described above will be discussed based on a flowchart of FIG. 11. First, the user enters the release range information to desire release of information through an input section 101 (step 1101). The position information detection section 102 detects the position information of the mobile station 12 and sends the position information to the mobile station radio section 103 at regular time intervals (step 1102). The mobile station radio section 103 transmits the release range information entered at step 1101 and the position information detected at step 1102 to the release range position information acquisition section 104 (step 1103).

The release range position information acquisition section 104 acquires the release range position information corresponding to the release range information and the position information received from the mobile station radio section 103 (step 1104). The in-range determination section 105 determines whether or not the mobile station 12 exists in the release range in which the user desires release of information based on the release range position information acquired in the release range position information acquisition section 104 (step 1105). If it is determined at step 1105 that the mobile station 12 exists in the release range, the release information storage section 106 permits the mobile station 12 to access release information and releases information to the mobile station (step 1106). On the other hand, if it is determined at step 1105 that the mobile station 12 does not exist in the release range, the release information storage section 106 does not permit the mobile station 12 to access release information (step 1107). At step 1107, the release information storage section 106 may inhibit any other equivalent mobile station from accessing release information.

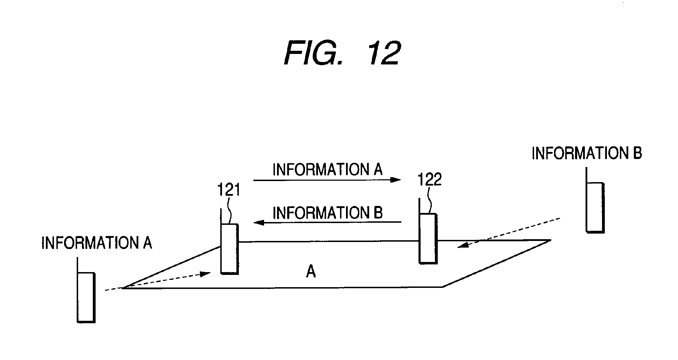

FIG. 12 is an image drawing of the information release range in the fourth embodiment. As shown in FIG. 12, information (information A, information B) can be exchanged between a mobile station 121 and a mobile station 122 existing in range A. For example, information can be exchanged in various circumstances such as only between the persons gathering in one event place or only between the persons in one electric train.

Thus, in the fourth embodiment, information can be exchanged only between the mobile stations existing in a specific range. Accordingly, information exchange can be limited only between the mobile stations existing in the specific range area.

### (Fifth embodiment)

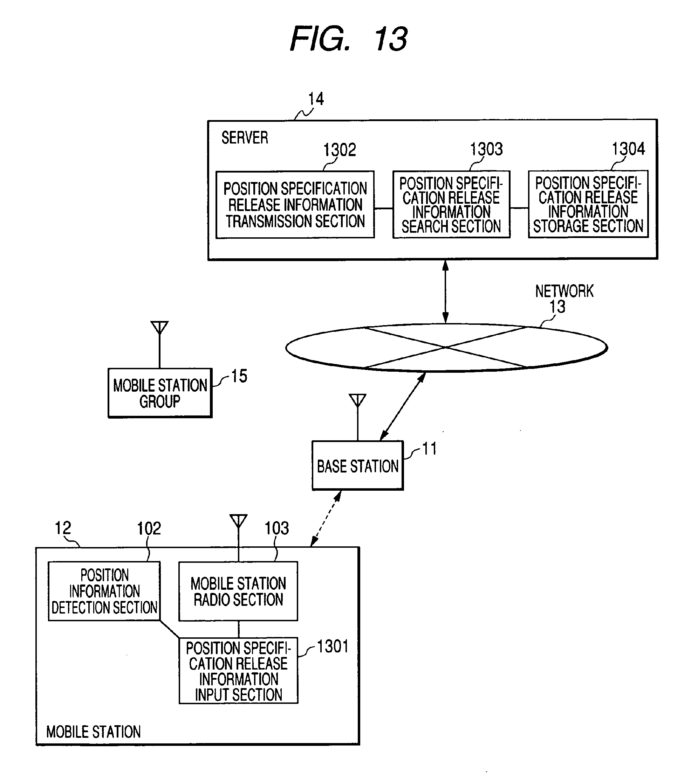

FIG. 13 is a block diagram to show the schematic configuration of an information release system according to a fifth embodiment of the invention. In the configuration of the information release system according to the first embodiment shown in FIG. 1, the information release system according to the fifth embodiment is provided with a position specification release information input section 1301 for inputting release information from the user and position information of a mobile station 12 in place of the input section 101, a position specification release information storage section 1304 for receiving and storing position specification release information from each mobile station in place of the release information storage section 106, and further a position specification release information search section 1303 for searching the position specification release information in the position specification release information storage section 1304 for information corresponding to the position of a different mobile station in place of the in-range determination section 105, and further a position specification release information transmission section 1302 for transmitting the position specification release information found in the position specification release information search section 1303 to the different mobile station at the position in place of the release range position information acquisition section 104. A mobile station group 15 is a different mobile telephone other than the mobile telephone 12. Sections corresponding to those of the information release system according to the first embodiment shown in FIG. 1 are denoted by the same reference numerals in FIG. 13 and will not be discussed again.

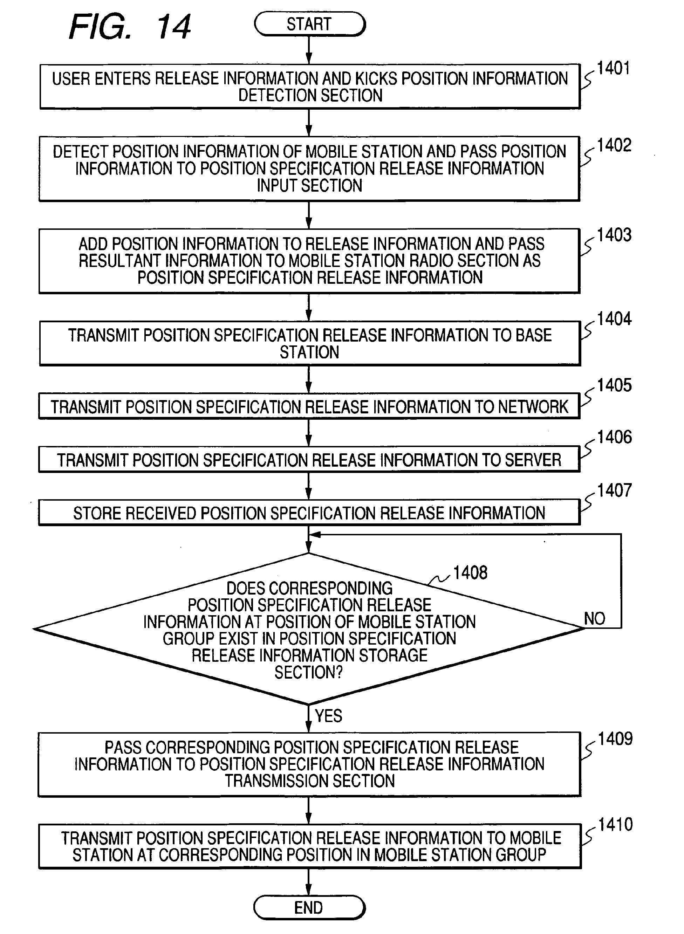

Next, the operation of the information release system according to the fifth embodiment having the configuration described above will be discussed based on a flowchart of FIG. 14. First, the user enters release information through the position specification release information input section 1301 and kicks a position information detection section 102 (step 1401 ). The position information detection section 102 detects the position information of the mobile station 12 and passes the position information to the position specification release information input section 1301 (step 1402). The position specification release information input section 1301 adds the position information to the release information and passes the resultant information to a mobile station radio section 103 as position specification release information (step 1403). The mobile station radio section 103 transmits the position specification release information to a base station 11 (step 1404). The base station 11 transmits the received position specification release information to a network 13 (step 1405). The network 13 transmits the position specification release information to a server 14 (step 1406).

The position specification release information storage section 1304 in the server 14 stores the received position specification release information (step 1407). The position specification release information search section 1303 determines whether or not the corresponding position specification release information at the position of the mobile station group 15 exists in the position specification release information storage section 1304 (step 1408). If the corresponding position specification release information at the position of the mobile station group 15 does not exist in the position specification release information storage section 1304 at step 1408, the position specification release information search section 1303 continues to monitor until the corresponding position specification release information exists. On the other hand, if the corresponding position specification release information at the position of the mobile station group 15 exists in the position specification release information storage section 1304 at step 1408, the position specification release information search section 1303 passes the corresponding position specification release information to the position specification release information transmission section 1302 (step 1409). The position specification release information transmission section 1302 receives the position specification release information and transmits the position specification release information to the mobile station at the corresponding position in the mobile station group 15 (step 1410).

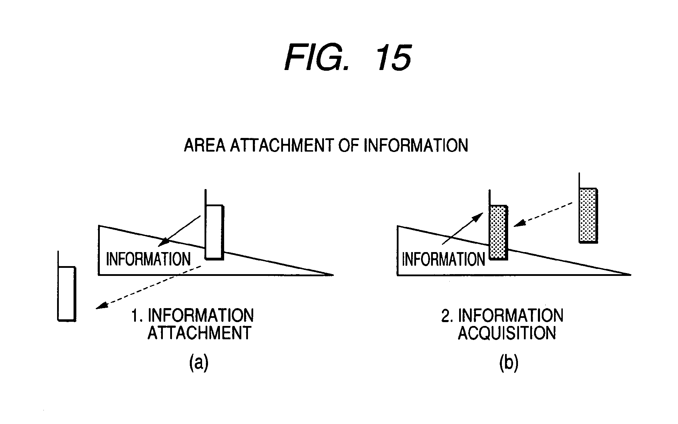

FIG. 15 is an image drawing of the information release range in the fifth embodiment. As shown in FIG. 15 (a), (b), information can be put on (attached to) an actual location as in orienteering, etc., and then the user entering the area can acquire the information.

Thus, in the fifth embodiment, the user puts the information that the user desires to release on an actual position. Accordingly, another user coming to the position can acquire the information.

### (Sixth embodiment)

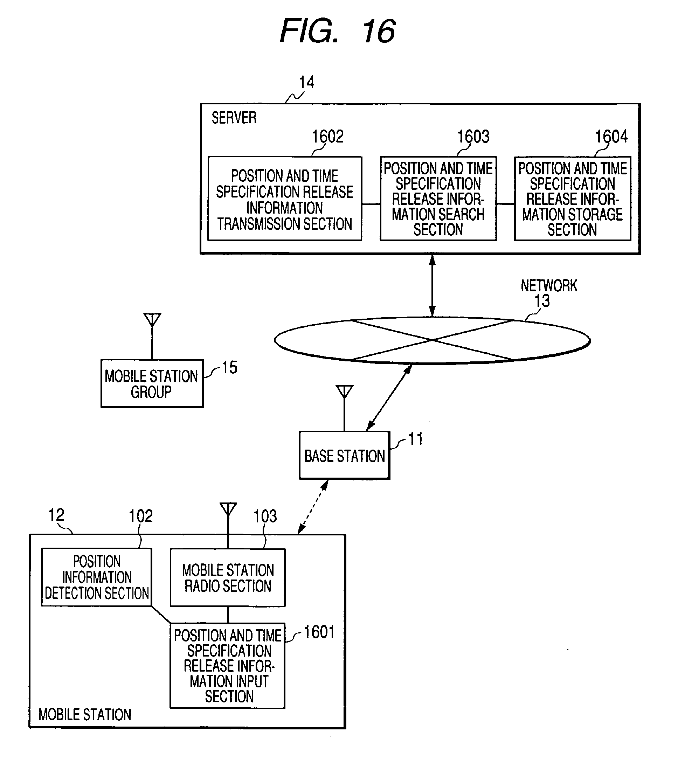

FIG. 16 is a block diagram to show the schematic configuration of an information release system according to a sixth embodiment of the invention. In the configuration of the information release system according to the fifth embodiment shown in FIG. 13, the information release system according to the sixth embodiment is provided with a position and time specification release information input section 1601 in place of the position specification release information input section 1301, a position and time specification release information transmission section 1602 in place of the position specification release information transmission section 1302, and further a position and time specification release information search section 1603 in place of the position specification release information search section 1303, and further a position and time specification release information storage section 1604 in place of the position specification release information storage section 1304. Sections corresponding to those of the information release system according to the fifth embodiment shown in FIG. 13 are denoted by the same reference numerals in FIG. 16 and the explanation thereof will be omitted.

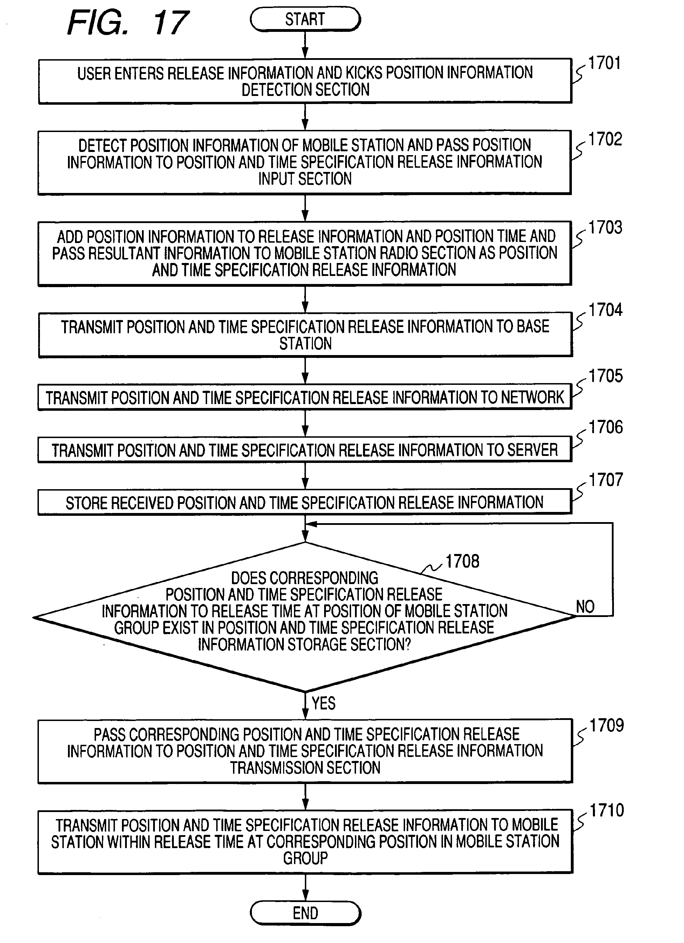

Next, the operation of the information release system according to the sixth embodiment having the configuration described above will be discussed based on a flowchart of FIG. 17. First, the user enters release information and release time through the position and time specification release information input section 1601 and kicks a position information detection section 102 (step 1701). The position information detection section 102 detects the position information of the mobile station 12 and passes the position information to the position and time specification release information input section 1601 (step 1702). The position and time specification release information input section 1601 adds the position information to the release information and the release time and passes the resultant information to a mobile station radio section 103 as position and time specification release information (step 1703). The mobile station radio section 103 transmits the position and time specification release information to a base station 11 (step 1704). The base station 11 transmits the received position and time specification release information to a network 13 (step 1705). The network 13 transmits the position and time specification release information to a server 14 (step 1706).

The position and time specification release information storage section 1604 in the server 14 stores the received position and time specification release information (step 1707). The position and time specification release information search section 1603 determines whether or not the corresponding position and time specification release information to the release time at the position of a mobile station group 15 exists in the position and time specification release information storage section 1604 (step 1708). If the corresponding position and time specification release information to the release time at the position of the mobile station group 15 does not exist in the position specification release information storage section 1604 at step 1708, the position and time specification release information search section 1603 continues to monitor until the corresponding position and time specification release information exists. On the other hand, if the corresponding position and time specification release information to the release time at the position of the mobile station group 15 exists in the position specification release information storage section 1604 at step 1708, the position and time specification release information search section 1603 passes the corresponding position and time specification release information to the position and time specification release information transmission section 1602 (step 1709). The position and time specification release information transmission section 1602 receives the position and time specification release information and transmits the position and time specification release information to the mobile station within the release time at the corresponding position in the mobile station group 15 (step 1710).

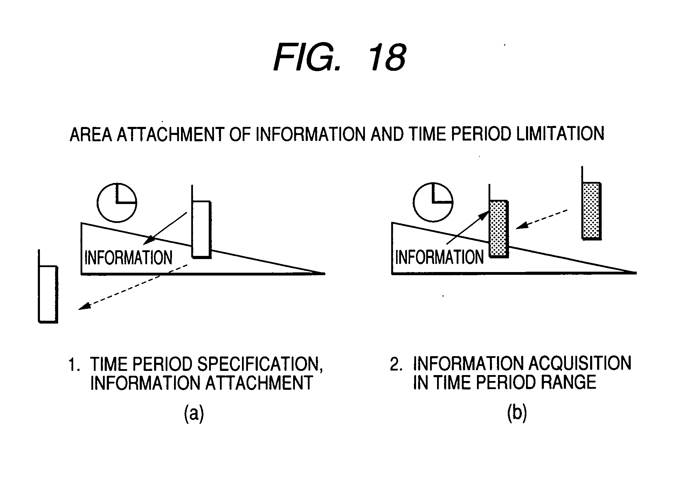

FIG. 18 is an image drawing of the information release range in the sixth embodiment. As shown in FIG. 18 (a), (b), information can be put on (attached to) an actual location as in orienteering, etc., and then the user entering the area in the specified time period can acquire the information. For example, information can be released in the period for special sale, in a specific district only, etc.

Thus, in the sixth embodiment, the user puts the information that the user desires to release on an actual position and another user coming to the position only in the specified time period can get the information. Accordingly, the range and the time period in which information is released can be limited.

### (Seventh embodiment)

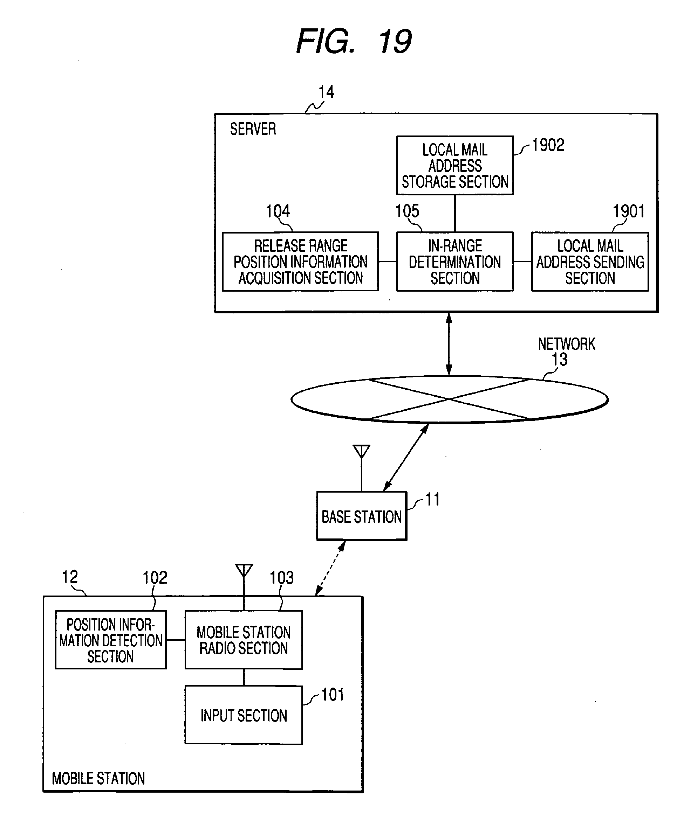

FIG. 19 is a block diagram to show the schematic configuration of an information release system according to a seventh embodiment of the invention. In the configuration of the information release system according to the first embodiment shown in FIG. 1, the information release system according to the seventh embodiment includes a local mail address sending section 1901 connected to the in-range determination section 105. Also, the information release system includes a local mail address storage section 1902 in place of the release information storage section 106. The local mail address sending section 1901 transmits the local mail address that can be used in the release range and the local mail address of a different mobile station existing in the release range to the user of the mobile station 12 only when the mobile station 12 exists in the release range. The local mail address storage section 1902 is configured to store the local mail addresses. Sections corresponding to those of the information release system according to the first embodiment shown in FIG. 1 are denoted by the same reference numerals in FIG. 19 and will not be discussed again.

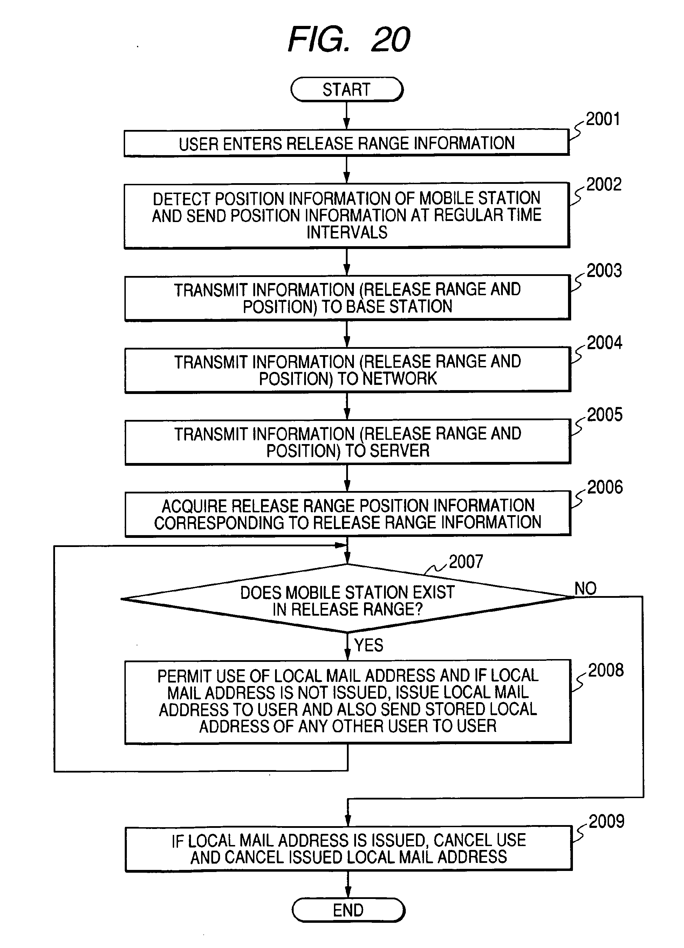

Next, the operation of the information release system according to the seventh embodiment having the configuration described above will be discussed based on a flowchart of FIG. 20. Processing at steps 2001 to 2006 in the flowchart of FIG. 20 is similar to that at steps 201 to 206 in the flowchart of FIG. 2 and therefore will not be discussed again. Following step 2006, the in-range determination section 105 determines whether or not the mobile station 12 exists in the release range in which the user desires release of information based on the release range position information acquired in a release range position information acquisition section 104 (step 2007). If it is determined at step 2007 that the mobile station 12 exists in the release range, use of the local mail address is permitted. If the local mail address is not issued, the local mail address storage section 1902 and the local mail address sending section 1901 issue the local mail address to the user and also send the stored local address of any other user to the user (step 2008). On the other hand, if it is determined at step 2007 that the mobile station 12 does not exist in the release range, if the local mail address is issued, the local mail address storage section 1902 and the local mail address sending section 1901 cancel use and cancel the issued local mail address (step 2009).

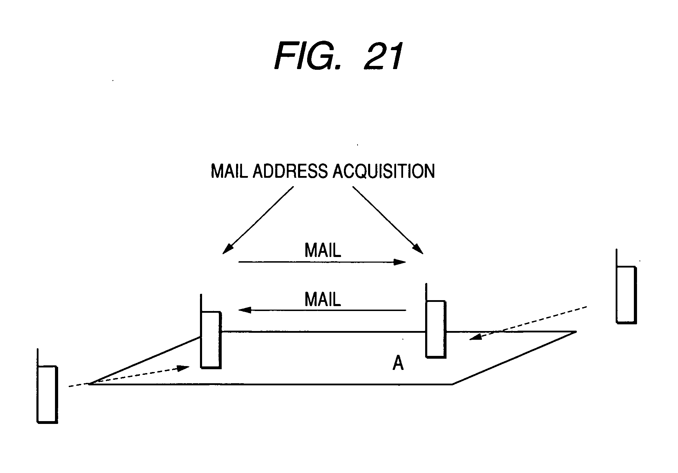

FIG. 21 is an image drawing of the information release range in the seventh embodiment. As shown in FIG. 21, the local mail address can be used to conduct communications between only the users existing in one range A. For example, the persons joining in one event can communicate with each other temporarily using the locally generated mail address.

Thus, in the seventh embodiment, the local mail address can be used to conduct communications between only the users existing in one range.

### (Eighth embodiment)

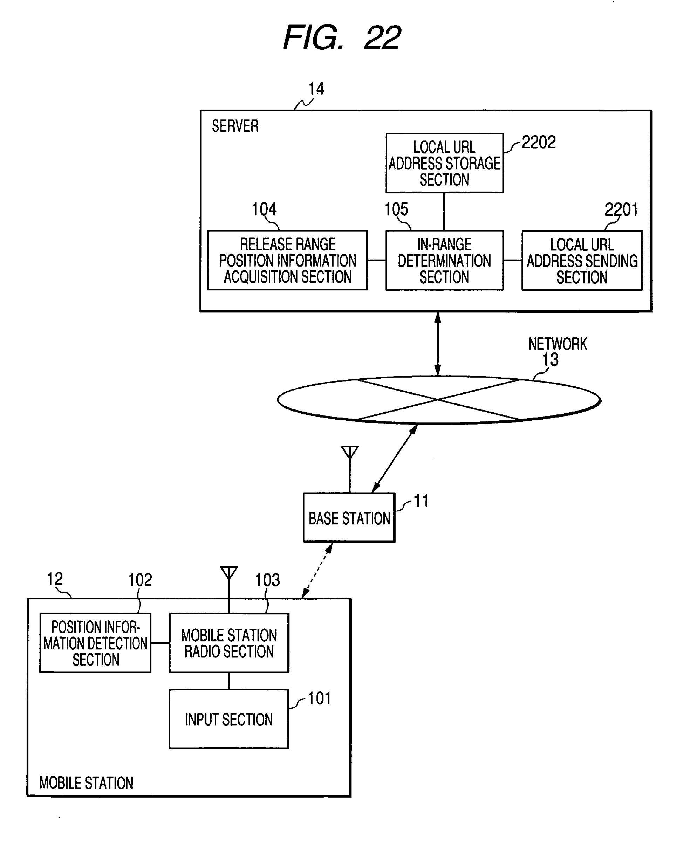

FIG. 22 is a block diagram to show the schematic configuration of an information release system according to an eighth embodiment of the invention. In the configuration of the information release system according to the seventh embodiment shown in FIG. 19, the information release system according to the eighth embodiment includes a local URL address sending section 2201 in place of the local mail address sending section 1901. The information release system includes a local URL address storage section 2202 in place of the local mail address storage section 1902. The local URL address sending section 2201 transmits the local URL address that can be used and accessed in the release range and the local URL address of a different mobile station existing in the release range to the user of the mobile station 12 only when the mobile station exists in the release range. The local URL address storage section 2202 stores the local URL address. Sections corresponding to those of the information release system according to the seventh embodiment shown in FIG. 19 are denoted by the same reference numerals in FIG. 22 and will not be discussed again.

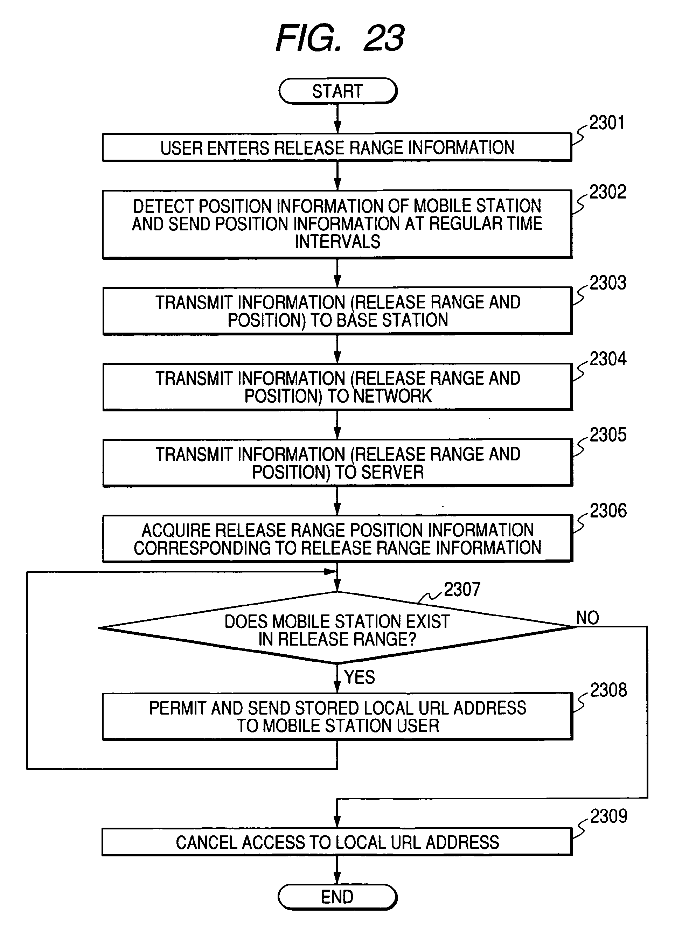

Next, the operation of the information release system according to the eighth embodiment having the configuration described above will be discussed based on a flowchart of FIG. 23. Processing at steps 2301 to 2306 in the flowchart of FIG. 23 is similar to that at steps 201 to 206 in the flowchart of FIG. 2 and therefore will not be discussed again. Following step 2306, an in-range determination section 105 determines whether or not the mobile station 12 exists in the release range in which the user desires release of information based on the release range position information acquired in a release range position information acquisition section 104 (step 2307). If it is determined at step 2307 that the mobile station 12 exists in the release range, access to the local URL address is permitted, and the local URL address storage section 2202 and the local URL address sending section 2201 send the stored local URL address to the user of the mobile station 12 (step 2308). On the other hand, if it is determined at step 2307 that the mobile station 12 does not exist in the release range, access to the local URL address is canceled (step 2309).

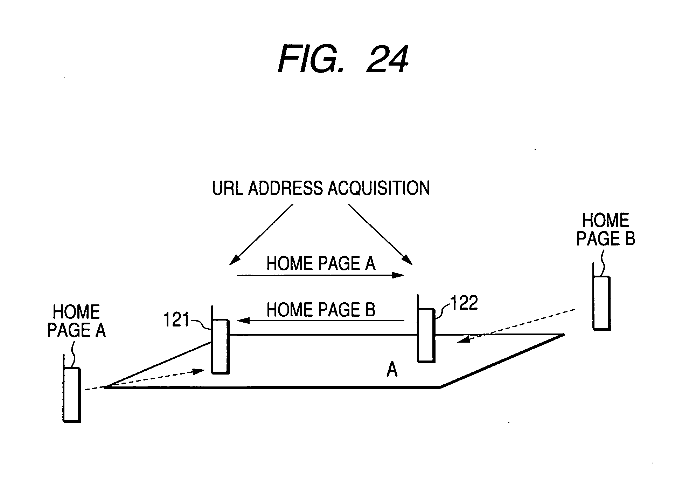

FIG. 24 is an image drawing of the information release range in the eighth embodiment. As shown in FIG. 24, the local URL address can be used to release a home page between only a mobile station 121 and a mobile station 122 existing in one range A. For example, only to the persons joining in one event with a Web server installed in a mobile telephone, etc., and from a mobile server retaining a home page, the page can be released.

Thus, in the eighth embodiment, the local URL address can be used to release the home page between only the users existing in one range.

### (Ninth embodiment)

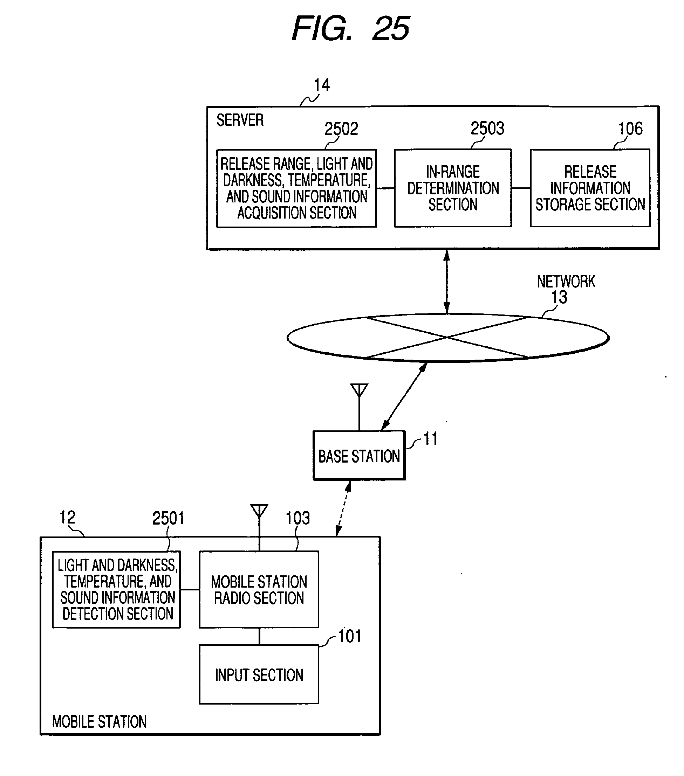

FIG. 25 is a block diagram to show the schematic configuration of an information release system according to a ninth embodiment of the invention. In the configuration of the information release system according to the first embodiment shown in FIG. 1, the information release system according to the ninth embodiment includes a light and darkness, temperature, and sound information detection section 2501 for detecting light and darkness, temperature, and sound information of the mobile station 12 in place of the position information detection section 102, a release range, light and darkness, temperature, and sound information acquisition section 2502 for acquiring numeric information of light and darkness, temperature, and sound information of each mobile station in place of the release range position information acquisition section 104, and further an in-range determination section 2503 for determining whether or not each mobile station exists in the range based on the numeric information of the light and darkness, temperature, and sound information of the mobile station in place of the in-range determination section 105. Sections corresponding to those of the information release system according to the first embodiment shown in FIG. 1 are denoted by the same reference numerals in FIG. 25 and will not be discussed again.

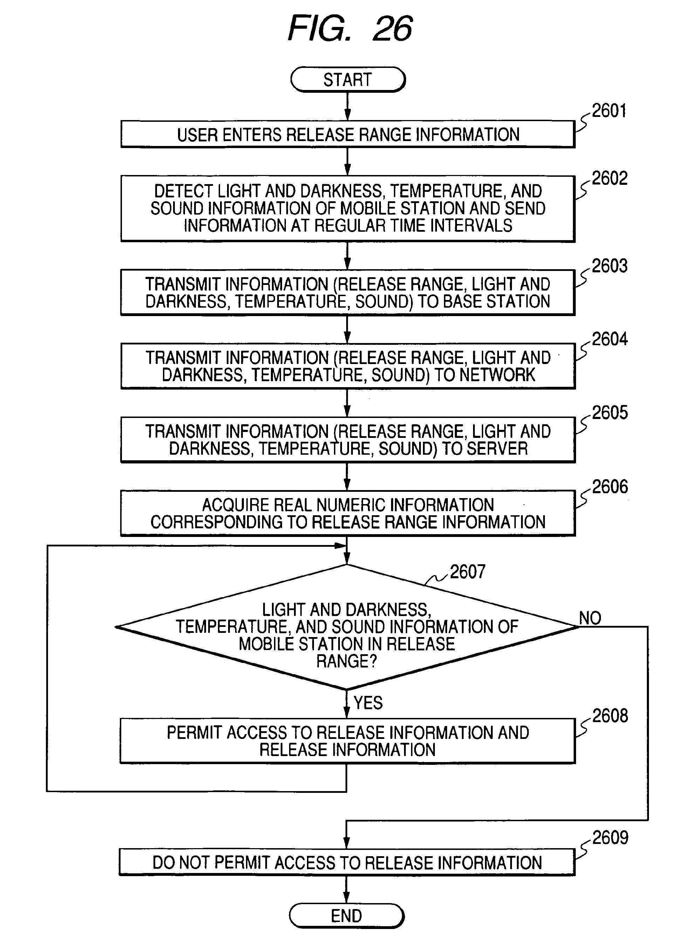

Next, the operation of the information release system according to the ninth embodiment having the configuration described above will be discussed based on a flowchart of FIG. 26. First, the user enters the release range information to desire release of information through an input section 101 (step 2601). The light and darkness, temperature, and sound information detection section 2501 detects the light and darkness, temperature, and sound information of mobile station 12 and sends the information to a mobile station radio section 103 at regular time intervals (step 2602). The mobile station radio section 103 transmits the release range information entered at step 2601 and the light and darkness, temperature, and sound information detected at step 2602 to a base station 11 (step 2603). The base station 11 transmits the release range information and the light and darkness, temperature, and sound information received from the mobile station 12 to a network 13 (step 2604). The network 13 transmits the release range information and the light and darkness, temperature, and sound information to a server 14 (step 2605).

The release range, light and darkness, temperature, and sound information acquisition section 2502 acquires the real numeric information corresponding to the release range information and the light and darkness, temperature, and sound information received from the network 13 (step 2606). The in-range determination section 2503 determines whether or not the light and darkness, temperature, and sound information of the mobile station 12 exists in the release range based on the real numeric information acquired in the release range, light and darkness, temperature, and sound information acquisition section 2502 (step 2607). If it is determined at step 2607 that the light and darkness, temperature, and sound information of the mobile station 12 exists in the release space range, a release information storage section 106 permits the mobile station 12 to access release information and releases information to the mobile station (step 2608). On the other hand, if it is determined at step 2607 that the light and darkness, temperature, and sound information of the mobile station 12 does not exist in the release range, the release information storage section 106 does not permit the mobile station 12 to access release information (step 2609).

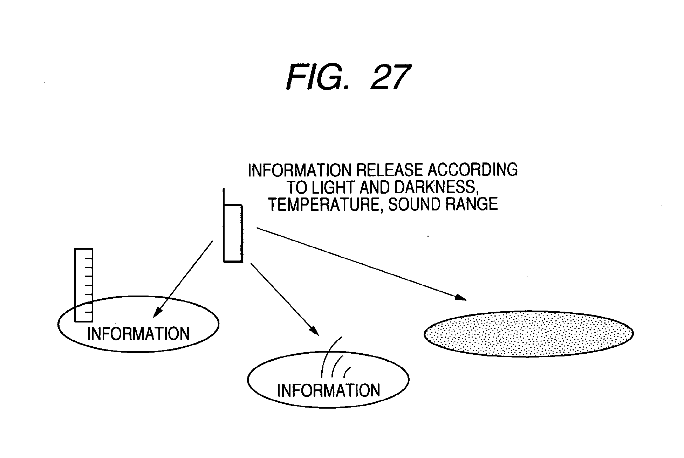

FIG. 27 is an image drawing of the information release range in the ninth embodiment. As shown in FIG. 27, information can be released only to the mobile stations existing in a specific light and darkness, temperature, sound range. For example, information can be released only in the night, only when it is hot, or only to a noisy or music sound place.

Thus, in the ninth embodiment, information is released only to mobile stations existing in a specific light and darkness, temperature, sound range. Accordingly, information release can be limited only to the mobile stations existing in the specific light and darkness, temperature, sound range.

### (Tenth embodiment)

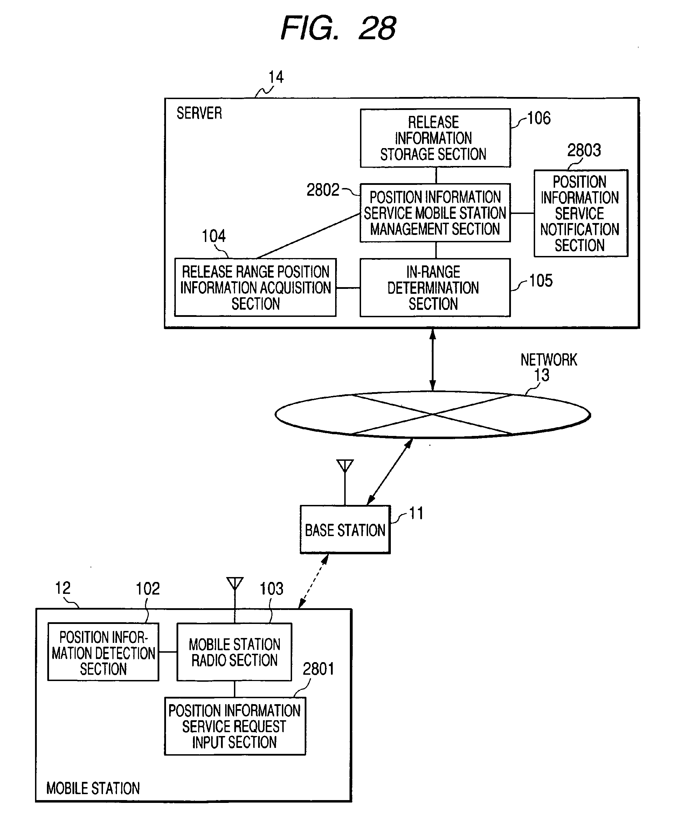

FIG. 28 is a block diagram to show the schematic configuration of an information release system according to a tenth embodiment of the invention. In the configuration of the information release system according to the first embodiment shown in FIG. 1, the information release system according to the tenth embodiment is provided with a position information service request input section 2801 for the user to enter position information service request and user ID in place of the input section 101, and the server 14 contains a position information service mobile station management section 2802 for checking whether or not the mobile station 12 exists in the range in which it can receive the position information service and if the mobile station 12 exists in the range, releasing information in a release information storage section 106 and informing the user of the position information service that can be provided, and a position information service notification section 2803 for notifying the mobile station of the service that can be provided at the current position of the mobile station 12. Sections corresponding to those of the information release system according to the first embodiment shown in FIG. 1 are denoted by the same reference numerals in FIG. 28 and will not be discussed again.

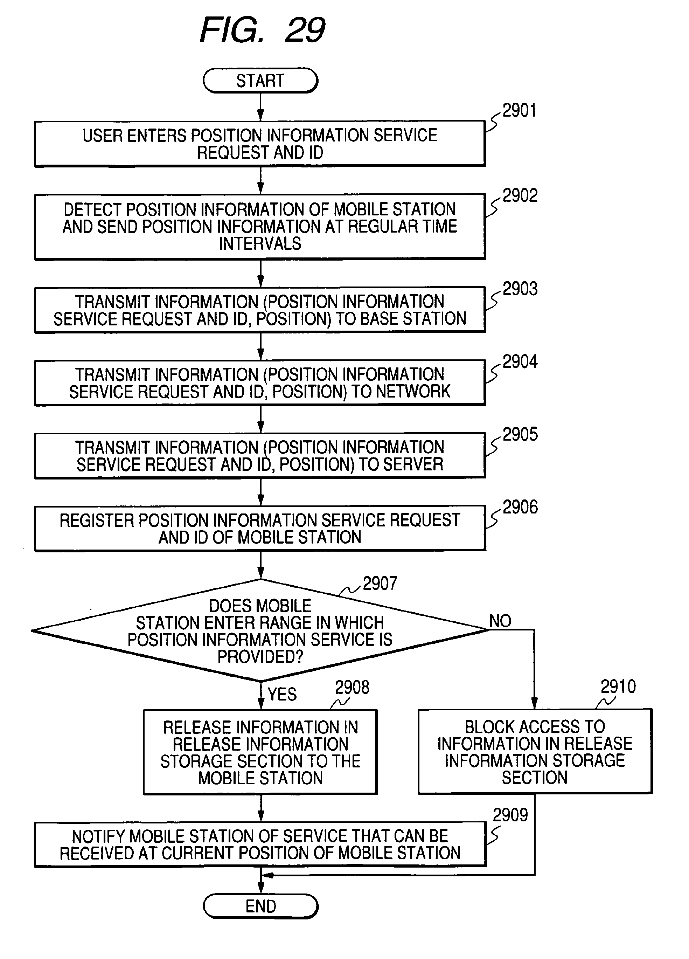

Next, the operation of the information release system according to the tenth embodiment having the configuration described above will be discussed based on a flowchart of FIG. 29. First, the user enters a position information service request and the user ID through the position information service request input section 2801 (step 2901). A position information detection section 102 detects the position information of the mobile station 12 and sends the position information to a mobile station radio section 103 at regular time intervals (step 2902). The mobile station radio section 103 transmits the position information service request and the user ID entered at step 2901 and the position information detected at step 2902 to a base station 11 (step 2903). The base station 11 transmits the position information service request and the user ID received from the mobile station 12 to a network 13 (step 2904). The network 13 transmits the position information service request and the user ID and the position information to the server 14 (step 2905).

The position information service mobile station management section 2802 registers the received position information service request and the user ID of the mobile station 12 (step 2906). A release range position information acquisition section 104 and an in-range determination section 105 determine whether or not the mobile station 12 enters the range in which the position information service is provided (step 2907). If it is determined at step 2907 that the mobile station 12 enters the range in which the position information service is provided, the information in the release information storage section 106 is released to the mobile station (step 2908). The position information service notification section 2803 notifies the mobile station 12 of the service that can be received at the current position of the mobile station 12 (step 2909). On the other hand, if it is determined at step 2907 that the mobile station 12 does not enter the range in which the position information service is provided, access to the information in the release information storage section 106 is blocked (step 2910).

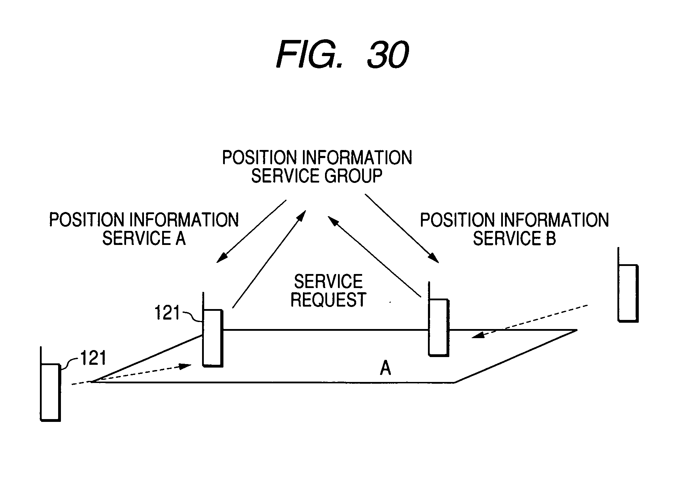

FIG. 30 is an image drawing of the information release range in the tenth embodiment. As shown in FIG. 30,a mobile station 121 in a specific position area A can enjoy the service involved in the position, but a mobile station 122 outside the position area A cannot enjoy the service involved in the position.

Thus, in the tenth embodiment, only the mobile station in the specific position area can enjoy the service involved in the position. Accordingly, the mobile stations that can enjoy the service involved in one position can be limited.

### (Eleventh embodiment)

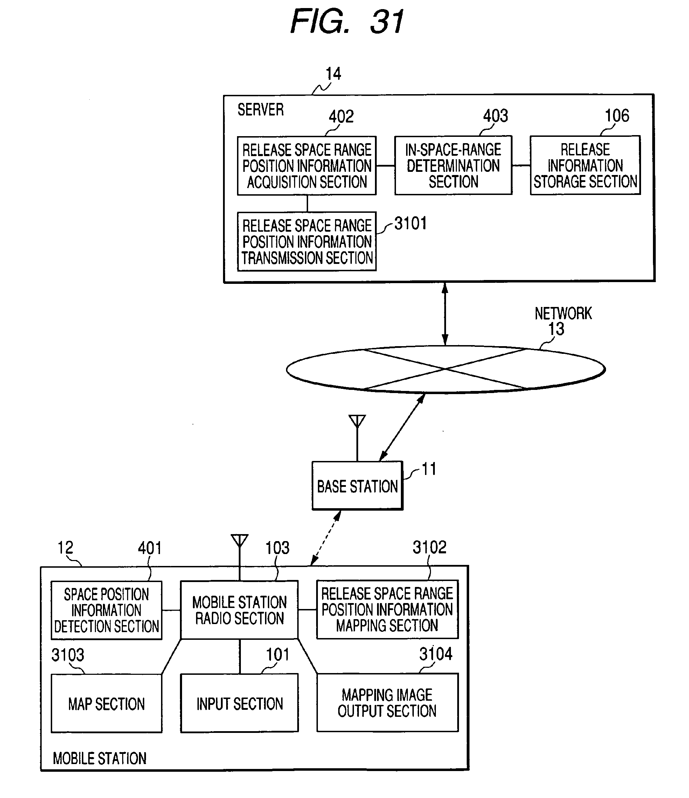

FIG. 31 is a block diagram to show the schematic configuration of an information release system according to an eleventh embodiment of the invention. In the configuration of the information release system according to the second embodiment shown in FIG. 4, the information release system according to the eleventh embodiment has the mobile station 12 provided with a release space range position information mapping section 3102 for mapping release range information and the position of the mobile station 12 in a space to a map or a capture image, a map section 3103 for storing map information, and a mapping image output section 3104 for presenting an image provided by mapping the release range information and the position of the mobile station 12 to a map or a capture image to the mobile station, and the server 14 provided with a release space range position information transmission section 3101 for transmitting space position information. Sections corresponding to those of the information release system according to the second embodiment shown in FIG. 4 are denoted by the same reference numerals in FIG. 31 and will not be discussed again.

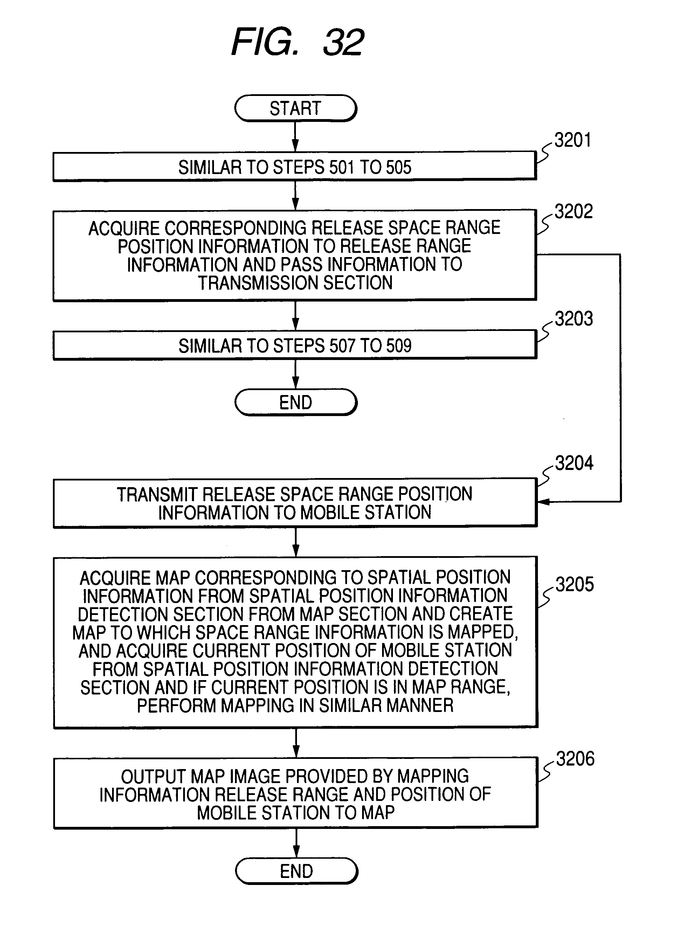

Next, the operation of the information release system according to the eleventh embodiment having the configuration described above will be discussed based on a flowchart of FIG. 32. First, similar processing to the processing at steps 501 to 505 in the flowchart of FIG. 5 is performed (step 3201). A release space range position information acquisition section 402 acquires the corresponding release space range position information to release range information and passes the release space range position information to the release space range position information transmission section 3101 (step 3202). Next, similar processing to the processing at steps 507 to 509 in the flowchart of FIG. 5 is performed (step 3203), and the processing is terminated.

After the release space range position information is passed to the release space range position information transmission section 3101 at step 3202, the release space range position information transmission section 3101 transmits the release space range position information to the mobile station 12 (step 3204). The release space range position information mapping section 3102 acquires a map corresponding to the spatial position information from a spatial position information detection section 401 from the map section 3103 and creates a map to which the space range information is mapped. It also acquires the current position of the mobile station 12 from the spatial position information detection section 401 and if the current position is in the map range, performs mapping in a similar manner (step 3205). The mapping image output section 3104 outputs a map image provided by mapping the information release range and the position of the mobile station 12 to the map (step 3206).

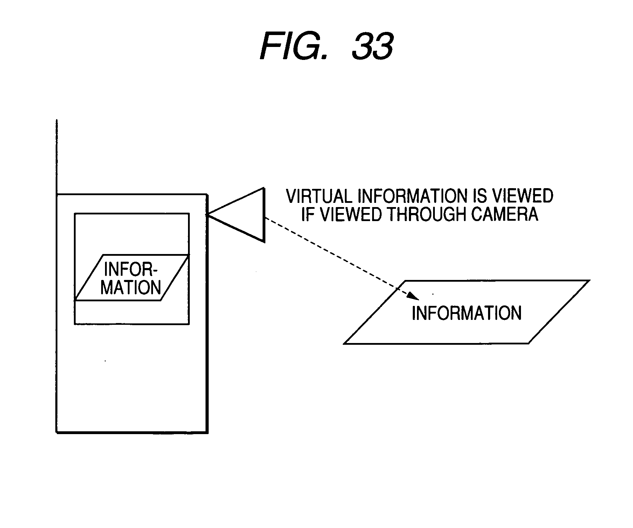

FIG. 33 is an image drawing of the information release range in the eleventh embodiment. As shown in FIG. 33, information is put on a virtual space or area and is superposed on display of a camera for displaying an actual image, whereby information put only on one limited area can be found and acquired only when viewed through the camera.

Thus, in the eleventh embodiment, the position of the mobile station of the user and the information release range (range on position or plane, range on space) can be mapped to a map or a capture image and the result can be presented to the mobile station of the user.

### (Twelfth embodiment)

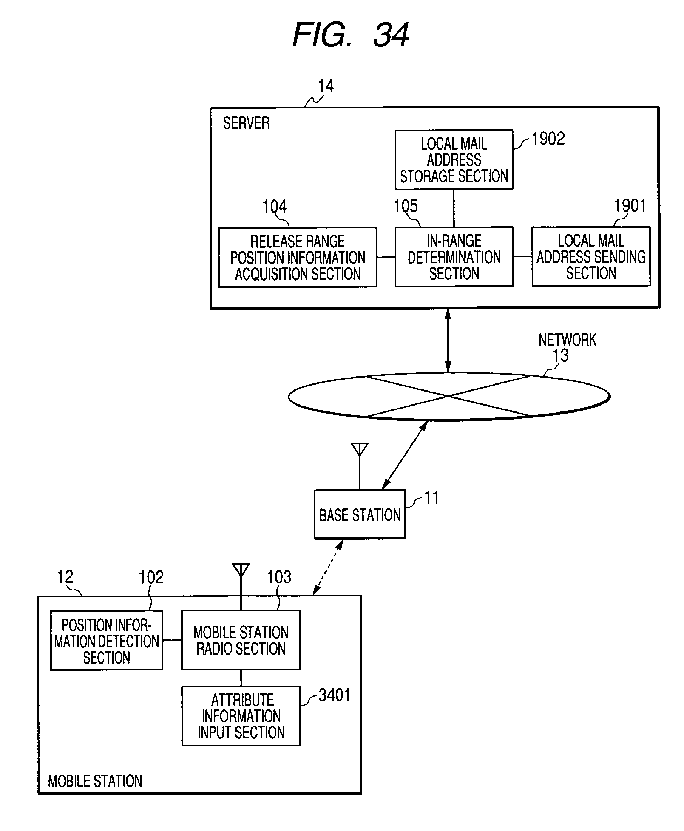

FIG. 34 is a block diagram to show the schematic configuration of an information release system according to a twelfth embodiment of the invention. In the configuration of the information release system according to the seventh embodiment shown in FIG. 19, the information release system according to the twelfth embodiment is provided with an attribute information input section 3401 for the user to enter attribute information as well as the range information to desire release of information in place of the input section 101. Sections corresponding to those of the information release system according to the seventh embodiment shown in FIG. 19 are denoted by the same reference numerals in FIG. 34 and will not be discussed again.

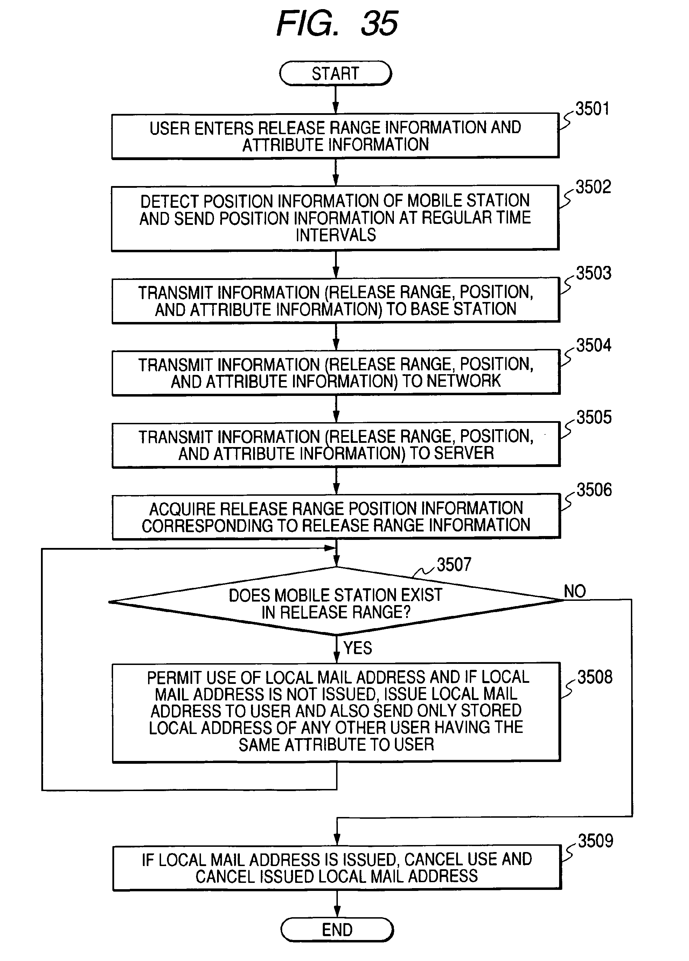

Next, the operation of the information release system according to the twelfth embodiment having the configuration described above will be discussed based on a flowchart of FIG. 35. First, the user enters the release range information to desire release of information and attribute information through the attribute information input section 3401 (step 3501). The position information detection section 102 detects the position information of a mobile station 12 and sends the position information to a mobile station radio section 103 at regular time intervals (step 3502). The mobile station radio section 103 transmits the release range information and the attribute information entered at step 3501 and the position information detected at step 3502 to a base station 11 (step 3503). The base station 11 transmits the release range information, the position information, and the attribute information received from the mobile station 12 to a network 13 (step 3504). The network 13 transmits the release range information, the position information, and the attribute information to a server 14 (step 3505).

A release range position information acquisition section 104 acquires the release range position information corresponding to the release range information, the position information, and the attribute information received from the network 13 (step 3506). An in-range determination section 105 determines whether or not the mobile station 12 exists in the release range in which the user desires release of information based on the release range position information acquired in the release range position information acquisition section 104 (step 3507). If it is determined at step 3507 that the mobile station 12 exists in the release range, use of the local mail address is permitted. If the local mail address is not issued, a local mail address storage section 1902 and a local mail address sending section 1901 issue the local mail address to the user and also send only the stored local address of any other user having the same attribute to the user (step 3508). On the other hand, if it is determined at step 3507 that the mobile station 12 does not exist in the release range, if the local mail address is issued, the local mail address storage section 1902 and the local mail address sending section 1901 cancel use and cancel the issued local mail address (step 3509).

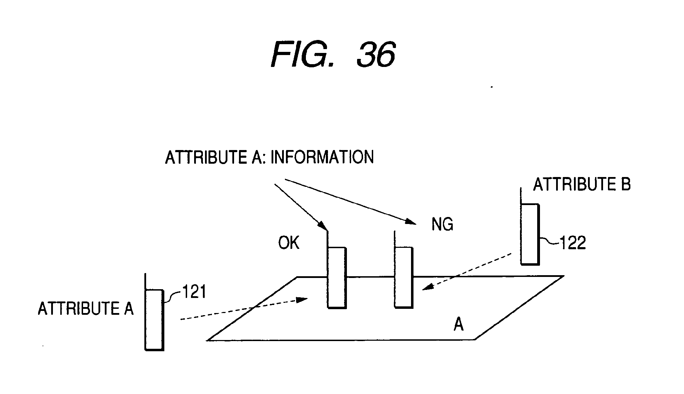

FIG. 36 is an image drawing of the information release range in the twelfth embodiment. As shown in FIG. 36, when a mobile station 121 of the user having one attribute A exists in a specific position area A, information is released to the mobile station 121, but not to a mobile station 122 if the mobile station 122 of the user not having the attribute A (having attribute B) exists in the specific position area A. Information can be released only to the persons existing in the area and having such an attribute, for example, like the persons in group A, the persons taking part in a sport, circle fellows, smokers, the persons liking coffee, etc.

Thus, in the twelfth embodiment, information is released according to the attribute information specified by the user. Accordingly, release information can be limited according to the attribute information specified by the user.

While the invention has been described in detail with reference to the specific embodiments, it will be obvious to those skilled in the art that various changes and modifications can be made without departing from the spirit and the scope of the invention.

The present application is based on Japanese Patent Application No. 2003-117071 filed on April 22, 2003, the contents of which are incorporated herein by reference.

### <Industrial Applicability>

As described above, according to the information release system of the invention, only when a mobile station exists in the release range, information is released to the mobile station, so that information release can be limited only to the mobile stations existing in a specific range area.

## Claims

1. An information release system for releasing information to a mobile station from a server through a network and a base station, comprising:
the mobile station, including:
an input unit which enters range information in which a user requests to release information;
a position information detection unit which detects position information of the mobile station at regular time intervals; and
a mobile station radio unit which transmits the range information entered through the input unit and the position information detected in the position information detection unit to the server through the base station and the network; and
the server, including:
a release range position information acquisition unit which acquires release range position information corresponding to the range information from the mobile station radio unit of the mobile station;
an in-range determination unit which determines whether or not the mobile station exists in the release range in which the user requests to release in accordance with the release range position information acquired in the release range position information acquisition unit and the position information; and
a release information storage unit which releases information to the mobile station only when the mobile station exists in the release range.

2. The information release system as set forth in claim 1, wherein the position information is spatial position information.

3. The information release system as set forth in claim 1, wherein the input unit of the mobile station is a release range position information input unit for directly entering the release range position information.

4. The information release system as set forth in claim 1, wherein the release range position information acquisition unit, the in-range determination unit, and the release information storage unit are included in the mobile station.

5. The information release system as set forth in claim 1, wherein the mobile station includes:
a position specification release information input unit which enters the release information from the user and the position information of the mobile station, and
the server includes:
a position specification release information storage unit which receives and stores position specification release information from each mobile station;
a position specification release information search unit which searches information corresponding to the position of a different mobile station among the position specification release information in the position specification release information storage unit; and
a position specification release information transmission unit which transmits the position specification release information found in the position specification release information search unit to the different mobile station at the position.

6. The information release system as set forth in claim 5, wherein time specification release information is used in addition to the position specification release information to release information at the time.

7. The information release system as set forth in claim 1, wherein the server includes:
a local mail address sending unit which transmits a local mail address that can be used in the release range and a local mail address of a different mobile station existing in the release range to the user only when the mobile station exists in the release range; and
a local mail address storage unit which stores the local mail addresses.

8. The information release system as set forth in claim 1, wherein the server includes:
a local URL address sending unit which transmits a local URL address that can be used and accessed in the release range and a local URL address of a different mobile station existing in the release range to the user only when the mobile station exists in the release range; and
a local URL address storage unit which stores the local URL addresses.

9. The information release system as set forth in claim 1, wherein the mobile station includes:
a light and darkness, temperature, and a sound information detection unit which detects light and darkness, temperature, and sound information of the mobile station in place of the position information detection unit, and
the server includes:
a release range, light and darkness, temperature, and a sound information acquisition unit which acquires numeric information of light and darkness, temperature, and sound information of each mobile station in place of the release range position information acquisition unit; and
an in-range determination unit which determines whether or not each mobile station exists in the range in accordance with the numeric information of the light and darkness, temperature, and sound information of the mobile station in place of the in-range determination unit.

10. The information release system as set forth in claim 1, wherein the mobile station includes:
a position information service request input unit which enters a position information service request from the user and a user ID, and
the server includes:
a position information service mobile station management unit which checks whether or not the mobile station exists in the range in which the mobile station can receive the position information service, releases information in the release information storage unit when the mobile station exists in the range, and informs the user of the position information service that can be provided; and
a position information service notification unit which notifies the mobile station of the service that can be provided at the current position of the mobile station.

11. The information release system as set forth in claim 1, wherein the mobile station includes:
a release space range position information mapping unit which maps release range information and the position of the mobile station in a space to a map or a capture image; and
a mapping image output unit which provides an image in which the release range information and the position of the mobile station are mapped to the map or the capture image to the mobile station.

12. The information release system as set forth in claim 1, wherein the input unit of the mobile station enters attribute information as well as the range information in which the user requests to release.
